# EUROPEAN PATENT SPECIFICATION

(11) **EP 3 872 900 B1**
(45) Date of publication and mention of the grant of the patent: **21.05.2025**
(21) Application number: 19915579.7
(22) Date of filing: 30.12.2019
(51) Int. Cl.: H01M 4/36, H01M 4/38, H01M 4/134, H01M 4/1395, H01M 4/62, H01M 10/052, H01M 4/02

(54) **SILICON-BASED LITHIUM-STORAGE MATERIAL AND PREPARATION METHOD THEREFOR**
AUF SILICIUM BASIERENDES LITHIUMSPEICHERMATERIAL UND VERFAHREN ZU SEINER HERSTELLUNG
MATÉRIAU DE STOCKAGE DE LITHIUM À BASE DE SILICIUM ET SON PROCÉDÉ DE PRÉPARATION

(43) Date of publication of application: 01.09.2021
(73) Proprietor: Shanghai Shanshan Tech Co., Ltd., Pudong New Area Shanghai 201209 (CN)
(72) Inventor: MA, Fei, Shanghai 201209 (CN); LIU, Dongdong, Shanghai 201209 (CN); WU, Zhihong, Shanghai 201209 (CN); WEI, Liangqin, Shanghai 201209 (CN); LI, Fengfeng, Shanghai 201209 (CN)
(74) Representative: Comoglio, Elena
(86) International application number: PCT/CN2019/129886
(87) International publication number: WO 2021/134195

(56) References cited:
- EP-A1- 3 518 328
- WO-A1-2019/103499
- CN-A- 1 419 303
- CN-A- 1 667 855
- CN-A- 101 271 974
- CN-A- 101 986 442
- CN-A- 101 986 442
- CN-A- 102 122 708
- CN-A- 104 979 536
- CN-A- 106 384 825
- CN-A- 109 713 286
- CN-A- 110 048 114
- CN-B- 107 195 890
- JP-A- 2008 308 359
- US-A1- 2005 233 213

## Description

### FIELD

The present disclosure relates to the field of lithium ion batteries, and in particular to a silicon-based lithium storage material and a preparation method thereof.

### BACKGROUND

In recent years, higher requirements for the energy performance of lithium-ion batteries have been put forward, resulting in the need of anode materials with a higher capacity, higher first-cycle coulombic efficiency, and higher safety. At present, silicon-oxygen anodes began to be used in power batteries, with a rapidly growing trend. Existing technologies for preparing anode materials of lithium battery starting from silicon oxide are mostly those that use raw materials containing silicon particles (Si) and silicon oxide (SiO₂) to obtain the anode materials of lithium battery under high-temperature and vacuum conditions. The silicon-based lithium storage materials prepared by the method have a low first-time coulombic efficiency and a poor cycle characteristics, and it is difficult for the method to form a silicon-based lithium storage material containing uniformly doped elements (such as sulfur, phosphorus, etc.).

D1 (WO2019103499A1) discloses an anode active material for a lithium secondary battery, capable of exhibiting excellent initial efficiency and lifespan characteristics since the anode active material comprises silicon-based particles represented by M-SiOₓ (M is Li, Mg, Ca, Al or Ti, and 0≤x<2), wherein the M-SiOₓ comprises 20-70 wt% of an amorphous phase; and a preparation method therefor.

D2 (US2005233213A1) discloses a negative active material for a rechargeable lithium battery, which includes a silicon-based composite having a silicon oxide of the form SiOₓ where x<=1.5 and at least one element selected from the group consisting of B, P, Li, Ge, Al, and V, and a carbonaceous material.

D3 (EP3518328A1) discloses a silicon composite including a porous silicon secondary particle and a first carbon flake on a surface of the porous silicon secondary particle; a carbonaceous coating layer on the porous silicon composite, the carbonaceous coating layer comprising a first amorphous carbon; and the silicon composite comprises a second amorphous carbon and has a density that is equal to or less than a density of the carbonaceous coating layer, wherein the porous silicon secondary particle includes an aggregate of silicon composite primary particles, each including silicon, a silicon suboxide on a surface of the silicon, and a second carbon flake on a surface of the silicon suboxide.

D4 (CN107195890B) discloses a high-performance lithium ion battery negative electrode Si@N-C composite material and a preparation method therefor. In the method, gulfweed is used as the raw material to prepare SiO₂ and then reduction is preformed to obtain a Si material; and next, pyrrole is used as the main raw material to coat polypyrrole on the surface of the Si material, and calcining is preformed to obtain the Si@N-C composite material.

D14 (CN109713286A) discloses a silicon-based composite material used for a lithium ion secondary battery and a preparation method thereof. The composite material includes a silicon-based material particle having lithium ions, the silicon-based material particle has a core-shell structure, and the outside of the particle is coated with a composite film layer; the composite film layer is divided into two layers: the inner layer is a carbon film layer completely covering or partially covering the surface of the silicon-based material particle or a carbon film/conductive additive composite film layer formed by the carbon film layer and a conductive additive; the outer layer is a partially crystallized or completely crystallized metal compound cladding layer, and the cladding layer completely covers or partially covers the surface of the silicon-based material particle or the surface of the inner layer.

D15 (CN101986442A) discloses a lithium ion battery cathode material containing a three-dimensional conductive structure and a preparation method thereof. Nano silicon powder is adopted as a core and is coated by a nano carbon material to form a core-containing conductor, and the core-containing conductor is coated by nano metal or metal oxide again, so lithium ion battery cathode material silicon nanoparticles containing the three-dimensional conductive structure are formed through the two-time coating.

Therefore, it is necessary to provide a new silicon-based lithium storage material and a preparation method thereof.

### SUMMARY

The present disclosure provides a new silicon-based lithium storage material and a preparation method thereof, to obtain a silicon-based lithium storage material with market-required higher capacity, higher first-cycle coulombic efficiency, and higher safety.

One aspect of the present disclosure provides a silicon-based lithium storage material, according to the independent claim 1, comprising
a core comprising
   a first component, comprising Si with a valence of 0-4, with the proviso that 0≤C_{Si(1-4)}/C_{Si(0)}≤1, where C_{Si(1-4)} is a molar amount of element silicon with a valence of 1-4, and C_{Si(0)} is a molar amount of element silicon with a valence of 0; and
   a second component, comprising a doping element R, where the doping element R is an element that accepts electrons, and
   with the proviso that 0≤C_{R}/C_{Si(0-4)}≤1.5, where C_{R} is a molar amount of the doping element R, and C_{Si(0-4)} is a molar amount of element silicon with a valence of 0-4;
a first shell coating the core, wherein the first shell is a carbon-containing material that has a conductivity lager than 10² S/m; and
a second shell coating the first shell, wherein the second shell is a metal oxide that has a dielectric constant of 10-40, said metal oxide is selected from MgO, Al₂O₃ and TiO₂,
characterized in that,
   the first shell is a graphitized carbon coating;
   the second shell has a thickness of 5-20 nm; and
   Si with a valence of 0-4 and the doping element R are uniformly distributed.

In some embodiments of the present disclosure, the graphitized carbon coating is doped with nitrogen atoms.

In some embodiments of the present disclosure, the second shell is a coexisting phase formed from one or more selected from the group consisting of a oxide of a group IIA element, a oxide of a rare earth element, and a compound formed between Ti, Zr and oxygen.

In some embodiments of the present disclosure, the doping element R at least comprises one of elements of group IA, group IIA, and group IIIA.

In some embodiments of the present disclosure, the elements of group IA, group IIA, and group IIIA comprises Li, Na, Mg, Ca, or Al.

In some embodiments of the present disclosure, the first shell has a thickness of 1-40 nm.

The present disclosure also provides a method for preparing a silicon-based lithium storage material, according to the independent claim 7, comprising
preparing a core of the silicon-based lithium storage material, wherein the core comprises
   a first component, comprising Si with a valence of 0-4, with the proviso that 0≤C_{Si(1-4)}/C_{Si(0)}≤1, where C_{Si(1-4)} is a molar amount of element silicon with a valence of 1-4, and C_{Si(0)} is a molar amount of element silicon with a valence of 0; and
   a second component, comprising a doping element R, where the doping element R is an element that is capable of accepting electrons, with the proviso that 0≤C_{R}/C_{Si(0-4)}≤1.5, where C_{R} is a molar amount of the doping element R, and C_{Si(0-4)} is a molar amount of element silicon with a valence of 0-4;
coating a surface of the core with a first shell, wherein the first shell is a carbon-containing material that has a conductivity lager than 10² S/m, the first shell being a graphitized carbon coating; and
coating a surface of the first shell with a second shell, wherein the second shell is a metal oxide that has a dielectric constant of 10-40, said metal oxide is selected from MgO, Al₂O₃ and TiO₂,
characterized in that, preparing the core of the silicon-based lithium storage material comprises
   providing a first mixture, where the first mixture at least comprises an elementary substance silicon and a silicon with an oxidation state of +4, and also a doping element R, where the doping element R at least comprises one of elements of group IA, group IIA, and group IIIA, with the proviso that 0≤C_{R}/C_{Si(0-4)}≤1.5, where C_{R} is the molar amount of the doping element R, and C_{Si(0-4)} is the molar amount of element silicon with a valence of 0-4;
   heating the first mixture to a molten state under the protection of a non-oxidizing gas, and then cooling to room temperature at a cooling rate of 5 °C/S-30 °C/S, to obtain a flaky cooled product; and
   pulverizing the flaky cooled product to form the core of the silicon-based lithium storage material; wherein
   the temperature when heating to a molten state is 1500 °C-3000 °C;
      and
coating the surface of the first shell with the second shell comprises
   mixing a precursor compound or a combination thereof with the core coated with the first shell, and decomposing the precursor compound through a thermal decomposition reaction, and coating a surface of the first shell with a second shell, during which the precursor compound is decomposed into the second shell, wherein
the precursor compound is tetrabutyl titanate, aluminum isopropoxide, magnesium isopropoxide or phenylmagnesium bromide.

In some embodiments of the present disclosure, cooling the molten first mixture to room temperature at a cooling rate of 5-30 °C/S comprises pouring the molten first mixture onto a fast roller, and separating the molten first mixture from the roller by a centrifugal action of the roller to obtain a flaky cooled product.

In some embodiments of the present disclosure, coating a surface the core with a first shell comprises
in a non-oxidizing atmosphere, passing a carbon source substance through a pre-decomposition zone to form a decomposition product, wherein the carbon source substance comprises one or more of a gaseous carbon source substance, a vaporized carbon source substance, and an atomized carbon source substance; and
adjusting the flow rate V_{G} of the decomposition product into a reaction chamber of a depositing-coating zone, and a ratio Mc/M of the molar flow rate of the decomposition product to the mass of the core, to subject the core and the decomposition product to a depositing and coating reaction in the depositing-coating zone, forming a first shell on the surface of the core, with the proviso that 10≤V_{G}≤100 and 0.001<Mc/M<1, where V_{G} is in a unit of m/min, Mc is in a unit of mol/min, in terms of carbon atoms, and M is the mass of the core, in a unit of kg.

In some embodiments of the present disclosure, the gaseous carbon source substance includes methane, ethane, ethylene, acetylene, propane, and propylene; the vaporized carbon source substance includes n-hexane, ethanol, and benzene; and the atomized carbon source substance includes polyethylene and polypropylene.

In some embodiments of the present disclosure, the method further comprises introducing a N-containing substance during the depositing and coating reaction, wherein the N-containing substance includes one or more of NH₃, tripolycyanamide, acetonitrile, aniline, and butylamine.

In some embodiments of the disclosure, through the designs of the first shell and the second shell, the cycle performance, stability and safety characteristics of the silicon-based lithium storage material as a whole are improved, and meanwhile meets market requirements for higher capacity, higher first-cycle coulombic efficiency and higher safety of lithium-ion batteries.

Additional features in the present disclosure will be described partly below. With the description, the contents described in the following embodiments and accompanying figure will be obvious to those skilled in the art. The inventive conception of the present disclosure can be fully explained by practicing or using the methods, means, and combinations thereof set forth in the detailed examples discussed below.

### BRIEF DESCRIPTION OF THE DRAWINGS

The following figure describes in detail the exemplary embodiments disclosed in this disclosure. The same reference numerals indicate similar structures in several views of the figures. Those of ordinary skill in the art would understand that these embodiments are non-limiting and exemplary embodiments. The figure is only for illustration and description purposes, and is not intended to limit the scope of the present disclosure. Embodiments in other ways are also possible to achieve the intention of the disclosure. It should be understood that the figure is not drawn with scale.

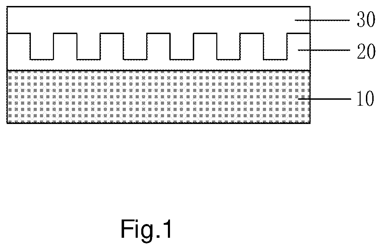

Figure 1 shows a schematic atomic structure of the silicon-based lithium storage material according to an embodiment of the present disclosure.

### DETAILED DESCRPTION

The following description provides specific application scenarios and requirements of the present disclosure, with the purpose of enabling those skilled in the art to manufacture and use the content in the present disclosure. For those skilled in the art, various local modifications to the disclosed embodiments are obvious, and the general principles defined herein can be applied to other embodiments and uses without departing from the scope of the present disclosure. Therefore, this disclosure is not limited to the illustrated embodiments, but the scope is consistent with the claims.

The technical solution of the present disclosure will be described in detail below in conjunction with embodiments and figure.

An embodiment of the present disclosure provides a silicon-based lithium storage material, according to the independent claim 1.

In some embodiments of the present disclosure, Si with a valence of 0-4 includes a Si particle in an elemental state, a silicon oxide SiOₓ (0<x≤2) and a silicate such as a compound represented by a general formula M_{y}SiO₃, where 1≤y≤2, and M is an element of groups IA, IIA and IIIA, such as Li, Na, Mg, Ca, or Al, etc. Also, 0≤C_{Si(1-4)}/C_{Si(0)}≤1, where C_{Si(1-4)} refers to the molar amount of silicon with a valence of 1-4, C_{Si(0)} refers to the molar amount of silicon atom present in a form of elementary substance and with a valence of 0, and C_{Si(1-4)/}C_{Si(0)} refers to a molar ratio (a ratio of the number of an atom) of a silicon with a valence of 1-4 to elementary substance silicon. The value of C_{Si(1-4)}/C_{Si(0)} can be achieved by adjusting the contents of the silicon particle, the silicon oxide, and the silicate contained in the silicon-based lithium storage material.

In some embodiments of the present disclosure, the doping element is marked as R, then the doping element R may be an element that is capable of accepting electrons, and at least include one of elements of group IA, group IIA, and group IIIA. The elements of group IA, group IIA, and group IIIA, for example, are Li, Na, Mg, Ca, Al and so on. The elements of group IA, group IIA, and group IIIA can be combined with other elements capable of accepting electrons to form an electrically neutral material. The other elements capable of accepting electrons include N, P, O, C, S, Se, and so on. The doping element R may be present in an atomic state or an ionic state in the silicon-based lithium storage material, and atoms of the doping element may combine with each other to form an ionic state, such as elementary substance Mg or elementary substance Al; for another example, the elements of group IA, group IIA, and group IIIA combine with one or more of N, P, O, C, S, Se to form a metal oxide or metal salt, such as MgO, Na₂O, CaO, Na₃PO₄, MgSO₃, etc. The doping element may combine with Si with a valence of 0-4 to form a silicon oxide, a silicate, etc., such as MgSiO₃, CaSiO₃, Li₂SiO₃ or Na₂SiO₃, etc. Also, 0≤C_{R}/C_{Si(0-4)}≤1.5, where C_{R} refers to the molar amount of the doping element R, and C_{Si(0-4)} refers to the molar amount of silicon with a valence of 0-4. By adjusting the doping amount of the doping element R, it is possible to change the characteristics of the silicon-based lithium storage material under a high-temperature storage condition after being intercalated with an active lithium and obtain the best results, and meanwhile improve the overall cycle performance and first-cycle coulombic efficiency of a battery containing the silicon-based lithium storage material. In some embodiments, the value of C_{R}/C_{Si(0-4)} is, for example, 0.2, 0.5, 0.8, 1, or 1.2 etc.

In the present disclosure, Si with a valence of 0-4 and the doping element R are uniformly distributed. Optionally, in order to obtain a higher first-cycle coulombic efficiency, the heating treatment could be performed in advance under the protection of inert gas. When there are elemental silicon crystal grains with a valence of 0 in the core, the elemental silicon crystal grains and the surrounding compound crystals are in a homogeneous system. All grains has a size not larger than 300 nm, as measured by powder X-ray diffraction and Scherrer calculation and analysis.

As analyzed by differential thermal scanning calorimetry (DSC), the core has 1-2 crystallization transition peaks between 800 and 1000 degrees, and the corresponding activation energy for crystallization transition is 100-250 KJ/mol. The 2P result of Si XPS test contains a peak between 98 eV (Si (0) peak) and 102.5 eV (Si(4+) peak)

In some embodiments of the present disclosure, the surface of the core of the silicon-based lithium storage material is further coated with a first shell, wherein the first shell is a carbon-containing material has a Raman Id/Ig ratio less than 0.5 and a conductivity lager than 10² S/m.

A shown in Figure 1, the first shell layer has a comb-shaped surface, and the comb-shaped structure could improve the cycle performance of a battery made from the silicon-based lithium storage material, and endow the battery with better rate capability.

In some embodiments of the present disclosure, the graphitized carbon coating has a thickness of 1-40 nm; for example, the graphitized carbon coating has a thickness of 5 nm, 10 nm, 15 nm, 20 nm, 25 nm, 30 nm, etc.

In some embodiments of the present disclosure, the graphitized carbon coating could further improve conduction characteristics of the material. The "coated (or coating)" described in the embodiments of the present disclosure may be "partially coated" or "completely coated". The degree of coating in "coated (or coating)" also varies with the manufacturing process of the silicon-based lithium storage material. In some embodiments of the present disclosure, it could be considered as "completely coating" if the graphitized carbon coating has a thickness of around 5 nm.

Since the graphitized carbon coating has a crystalline carbon structure with a high graphitization, it has a certain binding effect on the expansion of the silicon-based lithium storage material when being intercalated with lithium, and could prevent the cracking of the coating and the deactivation of the active substance material in the silicon-based lithium storage material during the deintercalation of lithium. Therefore, the first shell makes it possible to better adjust the charge-discharge performance of the silicon-based lithium storage material and improve the cycle life of the battery.

In some embodiments of the present disclosure, the graphitized carbon coating is doped with nitrogen atoms. The nitrogen atom may be derived from a N-containing substance, such as one or more of NH₃, tripolycyanamide, acetonitrile, aniline or butylamine. Introducing nitrogen atoms to the graphitized carbon coating could further improve the charge-discharge capability of the silicon-based lithium storage material, because nitrogen doping can further improve conductivity of the material, so as to reduce internal resistance of the battery, thereby ensuring charge and discharge capacity of the battery with a large current.

In some embodiments of the present disclosure, the silicon-based lithium storage material further comprises a second shell coating the first shell, wherein the second shell is a metal oxide that has a dielectric constant of 10-40. In some embodiments, the second shell is a coexisting phase formed from one or more selected from the group consisting of a oxide of a group IIA element, a oxide of a rare earth element, and a compound formed between Ti, Zr and oxygen. Optionally, the second shell is one or more selected from the group consisting of MgO, CaO, Al₂O₃, TiO₂, ZrO₂, CeO₂, Eu₂O₃, and Y₂O₃. The second shell is a ceramic like material, which is formed on the outer layer of the silicon-based lithium storage material, to prevent lithium leakage from the material and significantly improve the safety performance of the silicon-based lithium storage material after being made into a battery.

The silicon-based lithium storage material is a homogeneous doped system, so as to realize a uniform modification of the valence state, structure, crystal shape, and magnetic environment of the silicon-based lithium storage material, improve its characteristics under a high-temperature storage condition after it is intercalated with an active lithium as an active substance of a lithium-ion secondary battery and obtain the best result, and meanwhile improve cycle characteristics and initial charge-discharge coulombic efficiency of the battery. Through the designs of the first shell and the second shell, the cycle performance, stability and safety characteristics of the silicon-based lithium storage material as a whole is improved, and meanwhile meets market requirements for higher capacity, higher first-cycle coulombic efficiency and higher safety of lithium-ion batteries.

The present disclosure also provides a method for preparing a silicon-based lithium storage material, according to the independent claim 7, comprising
Step S1: preparing a core of the silicon-based lithium storage material, wherein the core comprises
   a first component, comprising Si with a valence of 0-4, with the proviso that 0≤C_{Si(1-4)}/C_{Si(0)}≤1, where C_{Si(1-4)} is a molar amount of element silicon with a valence of 1-4, and C_{Si(0)} is a molar amount of element silicon with a valence of 0; and
   a second component, comprising a doping element R, where the doping element R is an element that is capable of accepting electrons, with the proviso that 0≤C_{R}/C_{Si(0-4)}≤1.5, where C_{R} is a molar amount of the doping element R, and C_{Si(0-4)} is a molar amount of element silicon with a valence of 0-4;
Step S2: coating a surface of the core with a first shell, wherein the first shell is a carbon-containing material that a conductivity lager than 10² S/m, the first shell being a graphitized carbon coating; and
Step S3: coating a surface of the first shell with a second shell, wherein the second shell is a metal oxide that has a dielectric constant of 10-40; said metal oxide is selected from MgO, Al₂O₃ and TiO₂,
characterized in that, preparing the core of the silicon-based lithium storage material comprises
   providing a first mixture, where the first mixture at least comprises an elementary substance silicon and a silicon with an oxidation state of +4, and also a doping element R, where the doping element R at least comprises one of elements of group IA, group IIA, and group IIIA, with the proviso that 0≤C_{R}/C_{Si(0-4)}≤1.5, where C_{R} is the molar amount of the doping element R, and C_{Si(0-4)} is the molar amount of element silicon with a valence of 0-4;
   heating the first mixture to a molten state under the protection of a non-oxidizing gas, and then cooling to room temperature at a cooling rate of 5 °C/S-30 °C/S, to obtain a flaky cooled product; and
   pulverizing the flaky cooled product to form the core of the silicon-based lithium storage material; wherein
   the temperature when heating to a molten state is 1500 °C-3000 °C;
      and
coating the surface of the first shell with the second shell comprises
   mixing a precursor compound or a combination thereof with the core coated with the first shell, and decomposing the precursor compound through a thermal decomposition reaction, and coating a surface of the first shell with a second shell, during which the precursor compound is decomposed into the second shell, wherein
the precursor compound is tetrabutyl titanate, aluminum isopropoxide, magnesium isopropoxide or phenylmagnesium bromide.

In the embodiment of the present disclosure, the elementary substance silicon is, for example, polysilicon. The silicon with an oxidation state of +4 is, for example, silica, and the raw material containing silica is, for example, quartz, and optionally, for example, β-type quartz. The silicon with an oxidation state of +4 may also be a silicate, for example, a compound represented by a general formula M_{y}SiO₃, where 1≤y≤2, and M is an element of group IA, group IIA, and group IIIA such as Li, Na, Mg, Ca, etc .

The first mixture comprises a doping element R, where the doping element Rat least includes one of N, P, O, C, S, and Se, and may also includes elements of group IA, group IIA, and group IIIA such as Li, Na, Mg, Ca, etc.; the raw material providing the doping element may be an metal elementary substance such as Mg, or may be a metal oxide, a metal hydroxide, or a metal salt, such as MgO, Na₂O, CaO, Na₃PO₄, MgSO₃, LiOH, Li₂CO₃, MgCO₃, MgSiO₃, CaSiO₃, Li₂SiO₃ or Na₂SiO₃, etc.

A composition ratio of each raw material in the first mixture is adjusted, to meet the proviso that 0≤C_{R}/C_{Si(0-4)}≤1.5, where C_{R} is the molar amount of the doping element R, and C_{Si(0-4)} is the molar amount of element silicon with a valance of 0-4, for example, the sum of the molar amount of the silicon atoms in elementary substance silicon and silicon with an oxidation state of +4. In some embodiments of the present disclosure, the raw material includes polysilicon, β-type quartz and Li₂CO₃. In other embodiments of the present disclosure, the raw material includes polysilicon, β-type quartz and LiOH. In still other embodiments of the present disclosure, the raw material includes polysilicon, β-type quartz, and MgCO₃.

The non-oxidizing gas described in the embodiments of the present disclosure is, for example, an inert gas, such as helium, neon, and argon etc. In some embodiments of the present disclosure, the temperature when heating to a molten state is for example, 2000 °C, 2500 °C, etc. After heating to the molten state, the molten mixture is cooled rapidly to room temperature at a cooling rate of 5 °C/S-30 °C/S (°C/S: Celsius/second). The rapid cooling process may make the prepared material have the best cycle performance after being made into a battery.

In some embodiments of the present disclosure, cooling the molten first mixture to room temperature at a cooling rate of 5 °C/S-30 °C/S comprises pouring the molten first mixture onto a rapidly rotating roller, and separating the molten first mixture from the roller by a centrifugal action of the roller, to obtain a flaky cooled product. The rapidly rotating may be adjusted according to the gear position or the rotation speed setting of the used equipment with rollers, and is not specifically limited in the present disclosure.

After melting and rapidly cooling the first mixture, the atoms in the silicon-based lithium storage material are recombined, to meet the proviso that 0≤C_{Si(1-4)} /C_{Si(0)}≤1, where C_{Si(1-4)} is the molar amount of element silicon with a valence of 1-4, and C_{Si(0)} is the molar amount of element silicon with a valence of 0.

A process for pulverizing the flaky cooled product may be any conventional process for pulverizing and performed with any conventional device, which will not repeated here. In some embodiments, the pulverized silicon-based lithium storage material has a median particle size of 1-8 µm.

After performing Step S1, Step S2 is performed. A surface of the core is coated with a first shell, wherein the first shell is a carbon-containing material that has a Raman Id/Ig ratio less than 0.5 and a conductivity lager than 10² S/m. In some embodiments, for example, a process for coating a surface of the core with a first shell is a deposition-coating process. The first shell for example is a carbon coating. In some embodiments, a process for depositing the carbon coating comprises
in a non-oxidizing atmosphere, passing a carbon source substance through a pre-decomposition zone to form a decomposition product, wherein the carbon source substance includes at least one of a gaseous carbon source substance, a vaporized carbon source substance, or an atomized carbon source substance;
adjusting the flow rate V_{G} of the decomposition products into a reaction chamber of a depositing-coating zone, and a ratio Mc/M of the molar flow rate of the decomposition product to the mass of the core, to subject the core and the decomposition product to a depositing and coating reaction in the depositing-coating zone, forming a first shell on a surface of the core, with the proviso that 10≤V_{G}≤100 and 0.001≤M_{C}/M<1, where V_{G} is in a unit of m/min, M_{C} is in a unit of mol/min, in terms of carbon atoms, and M is the mass of the core, in a unit of kg.

A coating equipment such as a revolver, a rotary furnace and the like can be used to prepare the carbon coating, to achieve a uniform coating. The coating equipment may be configured to comprise a pre-decomposition zone and a depositing-coating zone, wherein both the pre-decomposition zone and the depositing-coating zone comprise a reaction chamber. The pre-decomposition zone is used to pre-decompose the carbon source substance. For example, the carbon source substance is introduced into the pre-decomposition zone of the coating equipment, and then subjected to pyrolysis, cracking, polycondensation reactions and the like in a non-oxidizing atmosphere, to become a gaseous substance. The carbon source comprises a low-molecular-weight substance and a high-molecular-weight substance, wherein the low-molecular-weight substance becomes a medium/large-molecular-weight substance via pyrolysis, polycondensation, and addition reactions and the like; the high-molecular-weight substance is cracked into a medium/small-molecular-weight substance, which is also accompanied by pyrolysis, polycondensation, addition reactions and the like.

The gas that provides the non-oxidizing atmosphere includes, for example, any one or more of hydrogen, nitrogen, or inert gas, and is used as a protective gas, a carrier gas, and a diluent gas for the reaction in the pre-decomposition zone.

The gaseous carbon source substance includes a hydrocarbon that is gaseous at room temperature and an aldehyde that is gaseous at room temperature. The gaseous carbon source substance includes methane, ethane, ethylene, acetylene, propane, and propylene. The vaporized carbon source substance is the carbonaceous material that is liquid at room temperature, and is gaseous at a temperature above room temperature but lower than the temperature of the pre-decomposition zone. The vaporized carbon source substance includes n-hexane, ethanol, and benzene.

The atomized carbon source substance is a substance that is difficult to evaporate by heating, and can be made into small droplets by an atomizing device, for example, a substance that is liquid at a temperature lower than the temperature of the pre-decomposition zone. The atomized carbon source substance includes polyethylene and polypropylene.

In some embodiments of the present disclosure, the flow rate V_{G} of the decomposition product into the reaction chamber of the depositing-coating zone and a ratio M_{C}/M of the molar flow rate of the decomposition product to the mass of the core are adjusted, to subject the core and the decomposition product to a depositing and coating reaction in the depositing-coating zone, forming a graphitized carbon coating on a surface of the core, with the proviso that 10≤V_{G}≤100 and 0.001≤M_{C}/M<1, where V_{G} is in a unit of m/min, M_{C} is in a unit of mol/min, in terms of carbon atoms, and M is the mass of the core, in a unit of kg. The first shell is a graphitized carbon coating. That is to say, in the preparation process of the silicon-based lithium storage material described in the embodiments of the present disclosure, the thickness of the formed graphitized carbon coating may be adjusted by adjusting the flow rate and mass of the reactants and the reaction time.

In other words, the crystal structure of the carbon coating can be controlled by adjusting V_{G} (m/min) and M_{C}/M (M_{C} is in a unit of mol/min, in terms of carbon atoms, and M is the mass of the core, in a unit of kg), thereby obtaining a graphitized carbon coating. At the same time, in combination with adjusting the reaction time, the mass percentage content of the carbon coating can be adjusted.

Adjusting the operation speed of the core and the flow rate of the decomposition product into the reaction chamber can ensure that a uniform and continuous graphitized carbon coating are obtained during the reaction process, and meanwhile the loss of materials could be reduced.

Since the graphitized carbon coating has a crystalline carbon structure with a high graphitization, it has a certain binding effect on the expansion of the silicon-based lithium storage material when being intercalated with lithium, and prevents the cracking of the coating and the deactivation of the active substance in the silicon-based lithium storage material during the deintercalation of lithium. Therefore, the graphitized carbon coating structure makes it possible to better adjust the charge-discharge performance of the silicon-based lithium storage material and improve the cycle life of the battery.

In some embodiments of the present disclosure, a molar flow rate M_{C} of the pyrolysis product after thermally decomposing the atomized carbon source in the pre-decomposition zone, can be determined by measuring the CO₂ content after an oxidative combustion. For the gaseous and vaporous carbon source, a molar flow rate M_{C} of the pyrolysis product can be directly determined according to the molecular structure of the intake gas.

In the embodiment of the present disclosure, the temperature range for pre-decomposing the carbon source substance is set to 500-1500 °C, and preferably 700 °C-1300 °C, so that the carbon source substance can turn into gaseous in the pre-decomposition zone, and be quickly subjected to pyrolysis or polycondensation reactions, forming a pre-decomposition zone product that can quickly be subjected to the subsequent coating reaction. In the pre-decomposition zone, the desired temperature can be realized by means of a conventional heating method or microwave or a radio frequency method. However, the microwave heating method can ionize the C-containing substance, and reduce the pre-decomposition temperature and improve the pre-decomposition efficiency compared with other heating methods.

In some embodiments of the present disclosure, after passing through the pre-decomposition zone, the gaseous carbon source substance is subjected to dehydrogenation, free radical addition reactions and the like, tobecome a straight-chain or aromatic compound with a larger relative molecular mass and a lower Gibbs free energy. After passing through the pre-decomposition zone, the vaporized carbon source substance is subjected to dehydrogenation (cracking), free radical addition reactions and the like, to become a straight-chain or aromatic compound. After passing through the pre-decomposition zone, the atomized carbon source substance is subjected to cracking, free radical addition reactions and the like, to become a straight-chain or aromatic compound.

In the embodiments of the present disclosure, after the pre-decomposition reaction, the mixed gas that passes through the pre-decomposition zone is a decomposition product, and the decomposition product comprises a non-oxidizing gas that are introduced into the reaction atmosphere and a pre-decomposed carbon source substance. The pre-decomposition reaction step can make the reaction temperature control in the preparation method of the silicon-based lithium storage material more flexible, is beneficial to control the reaction progress (such as the decomposition, addition etc.) of the carbon source substance, and has little interference to the temperature in the coating zone.

After that, the decomposition product is introduced into the depositing and coating zone of the coating equipment, so that the core and the pre-decomposed carbon source substance can be subjected to a depositing and coating reaction, so as to form a graphitized carbon coating on a surface of the core, wherein the surface of the core is directly coated by the graphitized carbon coating.

In some embodiments of the present disclosure, the depositing and coating reaction is carried out at a temperature of 500 °C-1100 °C. Preferably, the depositing and coating reaction is carried out at a temperature of 650 °C-1000 °C. During the depositing and coating reaction, if the temperature is too low, the C/H ratio of the coating on the surface of the anode material is too high, resulting in poor conductivity and having a negative effect on performance; if the temperature is too high, the silicon oxide in the core may be excessively disproportionated, having a negative effect on the capacity and cycle performance of the silicon-based lithium storage material.

During the depositing and coating reaction, a N-containing substance may also be introduced. The N-containing substance includes one or more of NH₃, acetonitrile, aniline, or butylamine. By introducing the N-containing substance, it is possible to obtain a graphitized carbon coating doped with N atoms. The graphitized carbon coating doped with N atoms can further improve the charge-discharge capability of the silicon-based lithium storage material, because the graphitized carbon coating after being doped with N can further improve the conductivity of the material, thereby reducing the internal resistance of the battery, and thus ensuring the ability of the battery to charge and discharge with high current.

After that, refer to Step S3: coating a surface of the first shell with a second shell, wherein the second shell is a metal oxide that has a dielectric constant of 10-40. In some embodiments, the second shell is a coexisting phase formed from one or more selected from the group consisting of a oxide of a group IIA element, a oxide of a rare earth element, and a compound formed between Ti, Zr and oxygen. Optionally, the second shell is one or more selected from the group consisting of MgO, CaO, Al₂O₃, TiO₂, ZrO₂, CeO₂, Eu₂O₃, and Y₂O₃.The second shell is a ceramic like material, which is formed on the outer layer of the silicon-based lithium storage material, to prevent lithium leakage of the material and significantly improve the safety performance of the silicon-based lithium storage material after being made into a battery.

A precursor compound or a combination thereof is selected and mixed with the core coated with the first shell, and the precursor compound (which could be decomposed into the second shell) is decomposed through a thermal decomposition reaction. Thereby, a surface of the first shell is coated with a second shell.

In a process for coating a surface of the first shell with a second shell, in some embodiments of the present disclosure, the precursor compound could be directly mixed with the core coated with the first shell, and then heated to a decomposition temperature of the precursor compound, thereby coating a surface of the first shell with a second shell.

In a process of coating a surface of the first shell with a second shell, in some embodiments of the present disclosure, the precursor compound may also be gasified, and the gasified precursor compound and the core coated with the first shell are introduced into a reaction chamber where the depositing and coating reaction occurs. The temperature in the reaction chamber is set greater than or equal to the decomposition temperature of the precursor compound and maintained for a specific time, thereby coating a surface of the first shell with a second shell. For example, Ti(OC₂H₅)₄ is selected as the precursor compound. After Ti(OC₂H₅)₄ was heated to a temperature higher than the boiling point of Ti(OC₂H₅)₄, it is introduced into a reaction chamber of a vapor deposition equipment at a certain flow rate. The core coated with the first shell is also sent into the reaction chamber of the vapor deposition equipment. Steam condensation deposition occurs in the reaction chamber, so that the precursor compound is decomposed, a surface of the first shell is coated with TiO₂ after decomposition. By adjusting the flow rate of the precursor compound and deposition time, TiO₂ has a thickness of greater than 0 nm and less than 20 nm, for example, the second shell has a thickness of 5 nm, 10 nm, 13 nm, 18 nm, etc.

In some embodiments of the present disclosure, as for a process for coating a surface of the first shell with a second shell, a physical vapor deposition process could be adopted directly to directly deposit the second shell on the surface of the first shell. For example, a second shell material such as one or more of MgO, CaO, Al₂O₃, TiO₂, ZrO₂, CeO₂, Eu₂O₃ and Y₂O₃, and the core coated with the first shell are placed in a physical vapor deposition equipment and heated until the second shell material evaporates and deposits on the surface of the first shell.

### Example 1

The first mixture was prepared, and it comprised a component A (polysilicon), a component B (β-type quartz), and a component C (Li₂CO₃), wherein the doping element R was based on element Li in the component C. The molar ratio of the component B to the component A (marked as Si(+4)/Si(0), representing a molar ratio of silicon with a valance of +4 in the component B to silicon with a valance of 0 in the component A) was 5: 3, and the molar ratio of element Li in the component C to element Si in the component A and the component B (C_{R}/C_{Si(0-4)}) was 0.5.

The first mixture was heated to 2600 °C and into a molten state under the protection of argon gas and then cooled to room temperature at a cooling rate of 20 °C/S (the molten first mixture was poured onto a fast roller and separated from the roller by a centrifugal action of the roller, to obtain a flaky cooled product). The flaky cooled product was then subjected to a pulverization to form a powder with a median particle size of 5 µm, as the core of the silicon-based lithium storage material.

A rotary furnace including a pre-decomposition zone and a depositing-coating zone was used. 1 kg of the core (with a median particle size of 5 µm) of the silicon-based lithium storage material of silicon is used as the silicon substrate material, nitrogen was used as the protective gas. A mixture of ethane gas and ethanol vapor with a flow rate V_{G} of 10 m/min was introduced into the pre-decomposition area, in which the molar ratio of ethane to ethanol was 1 : 1, and the reaction temperature was 900 °C. M_{C}/M was adjusted to 0.05 mol/min, and the pre-decomposed product was introduced into the depositing-coating zone of the rotary furnace, in which the temperature was 900 °C, and the total reaction time was 20 min, forming a first shell on the surface of the core, with a thickness of 10 nm.

The core material coated with the first shell was introduced into a chemical vapor deposition equipment, and magnesium isopropoxide was heated to vaporize, and then introduced into the chemical vapor deposition equipment. Magnesium isopropoxide was decomposed by rapid condensation, and thereby a second shell of MgO was coated on the surface of the first shell, and the thickness of the second shell was 5 nm.

### Example 2

A first mixture was prepared. The first mixture comprised component A (polysilicon), component B (β-Type quartz), and component C (MgCO₃). The doped element R was based on Mg element in component C. A molar ratio of component B to component A (marked as Si(+4) / Si(0), representing the molar ratio of +4-valent silicon in component B to 0-valent silicon in component A was 5 : 5, and the molar ratio of Mg element in component C to Si element in component A and component B (C_{R}/C_{Si(0-4)}) was 0.9.

The first mixture was heated to 2600 °C to a molten state under the protection of argon, and then cooled to room temperature at a cooling rate of 15 °C/S (the molten first mixture was poured onto a fast roller, and separated from the roller through the centrifugal action of the roller, obtaining a flaky cooled product). The flaky cooled product was pulverized, forming a powder with a median particle size of 4 µm, as the core of the silicon-based lithium storage material.

A rotary furnace including a pre-decomposition zone and a depositing-coating zone was used. 1 kg of the core (with a median particle size of 4 µm) of the silicon-based lithium storage material of silicon was used as the silicon substrate material. Nitrogen was used as the protective gas. A mixture of ethane gas and ethanol vapor with a flow rate V_{G} of 30 m/min was introduced into the pre-decomposition zone, in which the molar ratio of ethane to ethanol was 1 : 1. The reaction temperature was 950 °C. M_{C}/M was adjusted to 0.03 mol/min, and the pre-decomposed product mixture was introduced into the depositing-coating zone of the rotary furnace. The temperature in the depositing-coating zone was 1000 °C. The total reaction time was 20 min, and thereby a first shell was formed on the surface of the core, with a thickness of 12 nm.

The core material coated with the first shell was introduced into a chemical vapor deposition equipment, and magnesium isopropoxide was heated to vaporize and then also introduced into the chemical vapor deposition equipment. Magnesium isopropoxide was decomposed by rapid condensation, and a second shell of MgO was coated on the surface of the first shell, and the thickness of the second shell was 20 nm.

### Example 3

A first mixture was prepared. The first mixture comprised component A (polysilicon) and component B (β-Type quartz), and component C (LiOH). The doped element R was based on Li element in component C. The molar ratio of component B to component A (marked as Si (+4)/Si(0), representing the molar ratio of +4-valent silicon in component B to 0-valent silicon in component A) was 5 : 3, and the molar ratio of Li element in component C to Si element in component A and component B (C_{R}/C_{Si(0-4)}) was 1.2.

The first mixture was heated to 2800 °C to a molten state under the protection of argon, and then cooled to room temperature at a cooling rate of 10 °C/S (the molten first mixture was poured onto a fast roller, and separated from the roller through the centrifugal action of the roller, obtaining a flaky cooled product). The flaky cooled product was pulverized, forming a powder with a median particle size of 8 µm, as the core of the silicon-based lithium storage material.

A rotary furnace including a pre-decomposition zone and a depositing-coating zone was used. 1 kg of the core (with a median particle size of 8 µm) of the silicon-based lithium storage material of silicon was used as the silicon substrate material. Nitrogen was used as the protective gas. A mixture of ethane gas and ethanol vapor with a flow rate V_{G} of 60 m/min was introduced into the pre-decomposition zone, in which the molar ratio of ethane to ethanol was 1 : 1. The reaction temperature was 1000 °C. M_{C}/M was adjusted to 0.08 mol/min, and the pre-decomposed product mixture was introduced into the depositing-coating zone of the rotary furnace. The temperature in the depositing-coating zone was 1050 °C. The total reaction time was 20 min, and thereby a first shell was formed on the surface of the core, with a thickness of 8 nm.

The core material coated with the first shell was introduced into a chemical vapor deposition equipment, and phenylmagnesium bromide was heated to vaporize and also introduced into the chemical vapor deposition equipment. Phenylmagnesium bromide was decomposed by rapid condensation. A second shell of MgO was coated on the surface of the first shell, and the thickness of the second shell was 8 nm.

### Comparative Example

1 kg of silicon oxide SiOₓ (x=0.9) with a median particle size of 5 µm were used as the silicon-based material, nitrogen was used as the protective gas, and the reaction temperature was set 900 °C, a graphitized carbon coating with a thickness of 300 nm were deposited on the surface of the silicon-based material, to form a silicon-based anode material. The first-time lithium deintercalation capacity of the material was 760 mAh/g, the first-time coulombic efficiency was 64%, and the a capacity retention after 100 cycles at room temperature was 35%.

### Examples 4-10

Examples 4-10 were performed according to the Examples except that the process parameters were adjusted, forming the silicon-based lithium storage materials shown in Examples 1 to 10 as described in Table 1.

It can be seen from the table that when the thickness of the second shell is not 0, the silicon-based lithium storage material could pass through the acupuncture test, indicating that the second shell formed on the outer layer of the silicon-based lithium storage material could prevent lithium leakage from the material and significantly improve the safety performance of the silicon-based lithium storage material after being made into a battery. The acupuncture experiment was performed according to the acupuncture method specified in GBT 31485-2015. The prepared silicon-based lithium storage material was mixed with standard graphite material (with a capacity of 355 mAh/g and a first-cycle coulombic efficiency of 93%) to form 420 mAh/g negative electrode material, and then a soft pack battery made from the same was tested .

Further, when the silicon-based lithium storage material formed by the method for preparing the silicon-based lithium storage material as described in this example was used as the negative electrode material of a lithium battery, the first-cycle lithium removal capacity, first-cycle coulombic efficiency and 100-cycle capacity retention at room temperature were much higher than those of the silicon-based negative electrode material in comparative example.

**Table 1 Performance parameters of the prepared silicon-based lithium storage material in Examples 1-7**

| | Thick ness of the first shell (nm) | First shell materi al | Precursor material of second shell | Thick ness of the secon d shell (nm) | Constantcurrent capacity ratio (%, 3C/0.5C) | *Acupu ncture test | First-c ycle coulo mbic efficie ncy (%) | Capacit y retentio n after 300 cycles at room temper at-ure (%) |
|---|---|---|---|---|---|---|---|---|
| Example 1 | 10 | graphi tized carbon | magnesiu m isopropoxi de | 5 | 56 | pass through | 81 | 93 |
| Example 2 | 12 | graphi tized carbon | magnesiu m isopropoxi de | 20 | 71 | pass through | 80 | 80 |
| Example 3 | 8 | graphi tized carbon doped with nitrog en | phenylmag nesium bromide | 8 | 50 | pass through | 83 | 89 |
| Comparative Example 4 | 10 | graphi tized carbon | none | 0 | 56 | not pass through | 85 | 90 |
| Comparative Example 5 | 10 | graphi tized carbon doped with nirtrog en | none | 0 | 72 | not pass through | 86 | 92 |
| Example 6 | 10 | graphi tized carbon | tetrabutyl titanate | 5 | 70 | pass through | 84 | 91 |
| Example 7 | 10 | graphi tized carbon | aluminum isopropoxi de | 5 | 60 | pass through | 85 | 95 |
| Example 8 | 10 | graphi tized carbon | phenylmag nesium bromide | 5 | 65 | pass through | 87 | 93 |
| Example 9 | 10 | graphi tized carbon doped with nitrog en | aluminum isopropoxi de | 5 | 75 | pass through | 86 | 96 |
| Example 10 | 10 | graphi tized carbon | tetrabutyl titanate | 10 | 55 | pass through | 76 | 87 |

Through the designs of the first shell and the second shell of the silicon-based lithium storage material in examples of the disclosure, the cycle performance, stability and safety characteristics of the silicon-based lithium storage material as a whole were improved, and meanwhile the requirements for high-capacity, high first-cycle coulombic efficiency and high safety of lithium-ion batteries were met, meeting the market demand. Moreover, the silicon-based lithium storage material was a doped homogeneous system, which realized the uniform modification of the valence state, structure, crystal form and magnetic environment of the silicon-based lithium storage material, improved its characteristics under a high-temperature storage condition after it is intercalated with an active lithium as an active substance of a lithium-ion secondary battery and obtain the best result, and improved the cycle characteristics and initial charge-discharge coulombic efficiency of the battery.

In summary, after reading this detailed disclosure, those skilled in the art may understand that the foregoing detailed disclosure may be presented by way of example only, and may not be limiting. Although not explicitly stated here, those skilled in the art can understand that the present disclosure is intended to include various reasonable changes, improvements, and modifications to the embodiments. These changes, improvements, and modifications are intended to be proposed by the present disclosure, and are within the scope of the exemplary embodiments of the present disclosure.

It should be understood that the term "and/or" used herein includes any or all combinations of one or more of the associated listed items.

It should also be understood that the terms "comprising" "comprise(s)", "including", and/or "include(s)", when used herein, indicate the presence of the recited features, wholes, steps, operations, elements and/or components, but it does not exclude the presence or addition of one or more other features, wholes, steps, operations, elements, components, and/or groups thereof.

It should also be understood that although the terms first, second, third, etc. may be used herein to describe various elements, these elements should not be limited by these terms. These terms are only used to distinguish one element from another. Therefore, the first element in some embodiments may be referred to as the second element in other embodiments without departing from the teachings of the present disclosure. The same reference numerals or the same reference signs denote the same elements throughout the specification.

## Claims

1. A silicon-based lithium storage material, comprising
a core comprising
a first component, comprising Si with a valence of 0-4, with the proviso that 0≤C_{Si(1-4)}/C_{Si(0)}≤1, where C_{Si(1-4)} is a molar amount of element silicon with a valence of 1-4, and C_{Si(0)} is a molar amount of element silicon with a valence of 0; and
a second component, comprising a doping element R, where the doping element R is an element that accepts electrons, with the proviso that 0≤C_{R}/C_{Si(0-4)}≤1.5, where C_{R} is a molar amount of the doping element R, and C_{Si(0-4)} is a molar amount of element silicon with a valence of 0-4;
a first shell coating the core, wherein the first shell is a carbon-containing material that has a conductivity lager than 10² S/m;
a second shell coating the first shell, wherein the second shell is a metal oxide that has a dielectric constant of 10-40, said metal oxide is selected from MgO, Al₂O₃ and TiO₂,
**characterized in that**,
the first shell is a graphitized carbon coating;
the second shell has a thickness of 5-20 nm; and
Si with a valence of 0-4 and the doping element R are uniformly distributed.

2. The silicon-based lithium storage material of claim 1, **characterized in that**, the graphitized carbon coating is doped with nitrogen atoms.

3. The silicon-based lithium storage material of claim 1, **characterized in that**, the second shell is a coexisting phase formed from one or more selected from the group consisting of a oxide of a group IIA element, a oxide of a rare earth element, and a compound formed between Ti, Zr and oxygen.

4. The silicon-based lithium storage material of claim 1, **characterized in that**, the doping element R at least comprises one of elements of group IA, group IIA, and group IIIA.

5. The silicon-based lithium storage material of claim 4, **characterized in that**, the elements of group IA, group IIA, and group IIIA comprise Li, Na, Mg, Ca, or Al.

6. The silicon-based lithium storage material of claim 1, **characterized in that**, the first shell has a thickness of 1-40 nm.

7. A method for preparing the silicon-based lithium storage material, according to claims 1-6, comprising
preparing a core of the silicon-based lithium storage material, wherein the core comprises
a first component, comprising Si with a valence of 0-4, with the proviso that 0≤C_{Si(1-4)}/C_{Si(0)}≤1, where C_{Si(1-4)} is a molar amount of element silicon with a valence of 1-4, and C_{Si(0)} is a molar amount of element silicon with a valence of 0; and
a second component, comprising a doping element R, where the doping element R is an element that is capable of accepting electrons, with the proviso that 0≤C_{R}/C_{Si(0-4)}≤1.5, where C_{R} is a molar amount of the doping element R, and C_{Si(0-4)} is a molar amount of element silicon with a valence of 0-4;
coating a surface of the core with a first shell, wherein the first shell is a carbon-containing material that has a conductivity lager than 10² S/m, the first shell being a graphitized carbon coating; and
coating a surface of the first shell with a second shell, wherein the second shell is a metal oxide that has a dielectric constant of 10-40; said metal oxide is selected from MgO, Al₂O₃ and TiO₂,
**characterized in that**, preparing the core of the silicon-based lithium storage material comprises
providing a first mixture, where the first mixture at least comprises an elementary substance silicon and a silicon with an oxidation state of +4, and also a doping element R, where the doping element R at least comprises one of elements of group IA, group IIA, and group IIIA, with the proviso that 0≤C_{R}/C_{Si(0-4)}≤1.5, where C_{R} is the molar amount of the doping element R, and C_{Si(0-4)} is the molar amount of element silicon with a valence of 0-4;
heating the first mixture to a molten state under the protection of a non-oxidizing gas, and then cooling to room temperature at a cooling rate of 5 °C/S-30 °C/S, to obtain a flaky cooled product; and
pulverizing the flaky cooled product to form the core of the silicon-based lithium storage material; wherein
the temperature when heating to a molten state is 1500 °C-3000 °C;
and
coating the surface of the first shell with the second shell comprises
mixing a precursor compound or a combination thereof with the core coated with the first shell, and decomposing the precursor compound through a thermal decomposition reaction, and coating a surface of the first shell with a second shell, during which the precursor compound is decomposed into the second shell, wherein
the precursor compound is tetrabutyl titanate, aluminum isopropoxide, magnesium isopropoxide or phenylmagnesium bromide .

8. The method for preparing a silicon-based lithium storage material of claim 7, **characterized in that**, cooling a molten first mixture to room temperature at a cooling rate of 5-30 °C/S comprises pouring the molten first mixture onto a fast roller, and separating the molten first mixture from the roller by a centrifugal action of the roller to obtain a flaky cooled product.

9. The method for preparing a silicon-based lithium storage material of claim 7, **characterized in that**, coating a surface of the core with a first shell comprises
in a non-oxidizing atmosphere, passing a carbon source substance through a pre-decomposition zone to form a decomposition product, wherein the carbon source substance comprises one or more of a gaseous carbon source substance, a vaporized carbon source substance, and an atomized carbon source substance; and
adjusting the flow rate V_{G} of the decomposition product into a reaction chamber of a depositing-coating zone, and a ratio Mc/M of the molar flow rate of the decomposition product to the mass of the core, to subject the core and the decomposition product to a depositing and coating reaction in the depositing-coating zone, forming a first shell on the surface of the core, with the proviso that 10≤V_{G}≤100 and 0.001≤Mc/M<1, where V_{G} is in a unit of m/min, Mc is in a unit of mol/min, in terms of carbon atoms, and M is the mass of the core, in a unit of kg.

10. The method for preparing a silicon-based lithium storage material of claim 9, **characterized in that**, the gaseous carbon source substance includes methane, ethane, ethylene, acetylene, propane, and propylene; the vaporized carbon source substance includes n-hexane, ethanol, and benzene; and the atomized carbon source substance include polyethylene and polypropylene.

11. The method for preparing a silicon-based lithium storage material of claim 9, further comprising introducing a N-containing substance during the depositing and coating reaction, wherein the N-containing substance includes one or more of NH₃, tripolycyanamide, acetonitrile, aniline, and butylamine.

## Patentansprüche

1. Auf Silicium basierendes Lithiumspeichermaterial, umfassend einen Kern umfassend der
eine erste Komponente enthaltend Si mit einer Valenz von 0 bis 4, mit der Bedingung, dass 0 ≤ C_{si(1-4)/}Cₛᵢ₍₀₎ ≤ 1, wobei C_{Si(1-4)} eine molare Menge des Elements Silicium mit einer Valenz von 1 bis 4 ist und Cₛᵢ₍₀₎ eine molare Menge des Elements Silicium mit einer Valenz von 0 ist; und
eine zweite Komponente enthaltend ein Dotierungselement R, wobei das Dotierungselement R ein Element ist, das Elektronen akzeptiert, unter der Bedingung, dass 0 ≤ C_{R}/Cₛᵢ₍₀₋₄₎ ≤ 1,5, wobei C_{R} eine molare Menge des Dotierungselements R ist und Cₛᵢ₍₀₋₄₎ eine molare Menge des Elements Silicium mit einer Valenz von 0 bis 4 ist;
eine erste Schale, die den Kern umhüllt, wobei die erste Schale ein kohlenstoffhaltiges Material ist, das eine Leitfähigkeit von mehr als 10**²** S/m aufweist;
eine zweite Schale, die die erste Schale umhüllt, wobei die zweite Schale ein Metalloxid ist, das eine Dielektrizitätskonstante von 10 bis 40 aufweist, wobei dieses Metalloxid aus MgO, Al₂O₃ und TiO₂ ausgewählt wird,
**dadurch gekennzeichnet, dass**
die erste Schale eine graphitisierte Kohlenstoffumhüllung ist;
die zweite Schale eine Dicke von 5 bis 20 nm aufweist; und
Si mit einer Valenz von 0 bis 4 sowie das Dotierungselement R gleichmäßig verteilt sind.

2. Auf Silicium basierende Lithiumspeichermaterial nach Anspruch 1, **dadurch gekennzeichnet, dass** die graphitisierte Kohlenstoffumhüllung mit Stickstoffatomen dotiert wird.

3. Auf Silicium basierende Lithiumspeichermaterial nach Anspruch 1, **dadurch gekennzeichnet, dass** die zweite Schale eine koexistierende Phase ist, die aus einem oder mehreren, die aus der Gruppe bestehend aus einem Oxid eines Elements der Gruppe IIA, einem Oxid eines Seltenen Erden Elements und einer Verbindung, die zwischen Ti, Zr und Sauerstoff gebildet wird, ausgewählt wird, gebildet wird.

4. Auf Silicium basierende Lithiumspeichermaterial nach Anspruch 1, **dadurch gekennzeichnet, dass** das Dotierungselement R mindestens ein der Elemente der Gruppe IA, Gruppe IIA und Gruppe IIIA umfasst.

5. Auf Silicium basierende Lithiumspeichermaterial nach Anspruch 4, **dadurch gekennzeichnet, dass** die Elemente der Gruppe IA, Gruppe IIA und Gruppe IIIA Li, Na, Mg, Ca oder Al umfassen.

6. Auf Silicium basierende Lithiumspeichermaterial nach Anspruch 1, **dadurch gekennzeichnet, dass** die erste Schale eine Dicke von 1 bis 40 nm aufweist.

7. Verfahren zur Herstellung des auf Silicium basierenden Lithiumspeichermaterials nach Anspruch 1 bis 6, umfassend
Herstellen eines Kerns des auf Silicium basierenden Lithiumspeichermaterials, wobei der Kern umfasst
eine erste Komponente enthaltend Si mit einer Valenz von 0 bis 4, unter der Bedingung, dass 0 ≤ C_{Si(1-4)}/C_{Si(0)} ≤ 1, wobei C_{Si(1-4)} eine molare Menge des Elements Silicium mit einer Valenz von 1 bis 4 ist und Csi(0) eine molare Menge des Elements Silicium mit einer Valenz von 0 ist; und
eine zweite Komponente enthaltend ein Dotierungselement R, wobei das Dotierungselement R ein Elektronen akzeptierendes Element ist, unter der Bedingung, dass 0 ≤ C_{R}/Cₛᵢ₍₀₋₄₎ ≤ 1,5, wobei C_{R} eine molare Menge des Dotierungselements R ist und Cₛᵢ₍₀₋₄₎ eine molare Menge des Elements Silicium mit einer Valenz von 0 bis 4 ist;
Umhüllen der Oberfläche des Kerns mit einer ersten Schale, wobei die erste Schale ein kohlenstoffhaltiges Material ist, das eine Leitfähigkeit von mehr als 10**²** S/m aufweist, wobei die erste Schale eine graphitisierte Kohlenstoffumhüllung ist; und
Umhüllen der Oberfläche der ersten Schale mit einer zweiten Schale, wobei die zweite Schale ein Metalloxid ist, das eine Dielektrizitätskonstante von 10 bis 40 aufweist, wobei dieses Metalloxid aus MgO, Al₂O₃ und TiO₂ ausgewählt wird,
**dadurch gekennzeichnet, dass** das Herstellen des Kerns des auf Silicium basierenden Lithiumspeichermaterials umfasst
Bereitstellen einer ersten Mischung, wobei die erste Mischung mindestens elementares Silicium-Substanz und Silicium mit einer Oxidationszustand von +4 sowie ein Dotierungselement R enthält, wobei das Dotierungselement R mindestens ein Element der Gruppe IA, Gruppe IIA und Gruppe IIIA umfasst, unter der Bedingung, dass 0 ≤ C_{R}/Cₛᵢ₍₀₋₄₎ ≤ 1,5, wobei C_{R} die molare Menge des Dotierungselements R ist und Cₛᵢ₍₀₋₄₎ die molare Menge des Elements Silicium mit einer Valenz von 0 bis 4 ist;
Erhitzen der ersten Mischung bis zu einem Schmelzzustand unter Schutz eines nichtoxidierenden Gases und anschließend Abkühlen bei Raumtemperatur mit einer Abkühlgeschwindigkeit von 5 °C/S bis 30 °C/S, um ein abgekühltes Flockenprodukt zu erreichen; und
Zerkleinern des abgekühlten Flockenprodukts zum Bilden des Kerns des auf Silicium basierenden Lithiumspeichermaterials; wobei
die Temperatur beim Erhitzen bis zu einem Schmelzzustand zwischen 1500 °C und 3000 °C liegt;
und
wobei das Umhüllen der Oberfläche der ersten Schale mit der zweiten Schale umfasst
Mischen einer Vorläuferverbindung oder einer Kombination davon mit dem Kern, der mit der ersten Schale umhüllt wird, und Zersetzen der Vorläuferverbindung durch eine thermische Zersetzungsreaktion und Umhüllen der Oberfläche der ersten Schale mit einer zweiten Schale, wobei die Vorläuferverbindung in die zweite Schale zersetzt wird, wobei
die Vorläuferverbindung aus Tetrabutyl-Titanate, Aluminiumisopropoxid, Magnesiumisopropoxid oder Phenylmagnesiumbromid besteht.

8. Verfahren zur Herstellung eines auf Silicium basierenden Lithiumspeichermaterials nach Anspruch 7, **dadurch gekennzeichnet, dass** Abkühlen einer geschmolzenen ersten Mischung bei Raumtemperatur mit einer Abkühlgeschwindigkeit von 5 bis 30 °C/S umfasst Gießen der geschmolzenen ersten Mischung auf eine Schnellwalze und Trennen der geschmolzenen ersten Mischung von der Walze durch die Zentrifugalwirkung der Walze, um ein abgekühltes Flockenprodukt zu erreichen.

9. Verfahren zur Herstellung eines auf Silicium basierenden Lithiumspeichermaterials nach Anspruch 7, **dadurch gekennzeichnet, dass** Umhüllen der Oberfläche des Kerns mit einer ersten Schale umfasst
in einer nichtoxidierenden Atmosphäre Durchlassen einer Kohlenstoffquellensubstanz durch eine Zersetzungszone zum Bilden eines Zersetzungsprodukts, wobei die Kohlenstoffquellensubstanz eine oder mehrere einer gasförmigen Kohlenstoffquellensubstanz, einer verdampften Kohlenstoffquellensubstanz und einer zerstäubten Kohlenstoffquellensubstanz umfasst; und
Einstellen des Volumenstroms V_{G} des Zersetzungsprodukts in eine Reaktionskammer einer Abscheidung-Umhüllungszone sowie eines Verhältnisses Mc/M des molaren Volumenstroms des Zersetzungsprodukts zu der Masse des Kerns, Unterziehen des Kerns und des Zersetzungsprodukts einer Abscheidungs- und Umhüllungssreaktion in der Abscheidungs-Umhüllungszone, wodurch eine erste Schale auf der Oberfläche des Kerns gebildet wird, unter der Bedingung, dass 10 ≤ V_{G} ≤ 100 und 0,001 ≤ Mc/M < 1, wobei V_{G} in m/min ausgedrückt wird, Mc in mol/min in Bezug auf Kohlenstoffatome ausgedrückt wird und M die Masse des Kerns in kg ist.

10. Verfahren zur Herstellung eines auf Silicium basierenden Lithiumspeichermaterials nach Anspruch 9,
**dadurch gekennzeichnet, dass** die gasförmige Kohlenstoffquellensubstanz Methan, Ethan, Ethylen, Acetylen, Propan und Propylen umfasst; die verdampfte Kohlenstoffquellensubstanz n-Hexan, Ethanol und Benzol umfasst; und die zerstäubte Kohlenstoffquellensubstanz Polyethylen und Polypropylen umfasst.

11. Verfahren zur Herstellung eines auf Silicium basierenden Lithiumspeichermaterials nach Anspruch 9, ferner
umfassend Einführen einer N-haltigen Substanz während der Abscheidungs- und Umhüllungsreaktion, wobei die N-haltige Substanz eine oder mehrere der folgenden umfasst: NH₃, Tripolycyanamide, Acetonitril, Anilin und Butylamin.

## Revendications

1. Un matériau de stockage de lithium à base de silicium, comprenant
un noyau comprenant
un premier composant, comprenant du Si avec une valence de 0 à 4, à la condition que 0 ≤ C_{Si(1-4)}/C_{Si(0)} ≤ 1, où C_{Si(1-4)} est une quantité molaire de l'élément silicium avec une valence de 1 à 4, et Cₛᵢ₍₀₎ est une quantité molaire de l'élément silicium avec une valence de 0; et
un second composant, comprenant un élément dopant R, où l'élément dopant R est un élément acceptant des électrons, à la condition que 0 ≤ C_{R}/Cₛᵢ₍₀₋₄₎ ≤ 1,5, où C_{R} est une quantité molaire de l'élément dopant R, et Cₛᵢ₍₀₋₄₎ est une quantité molaire de l'élément silicium avec une valence de 0 à 4;
une première enveloppe recouvrant le noyau, où la première enveloppe est un matériau contenant du carbone ayant une conductivité supérieure à 10**²** S/m;
une seconde enveloppe recouvrant la première enveloppe, où la seconde enveloppe est un oxyde métallique ayant une constante diélectrique de 10 à 40, ledit oxyde métallique étant sélectionné parmi MgO, Al₂O₃ et TiO₂,
**caractérisé en ce que**
la première enveloppe est un revêtement en carbone graphitisé;
la seconde enveloppe a une épaisseur de 5 à 20 nm;
et le Si avec une valence de 0 à 4 et l'élément dopant R sont uniformément répartis.

2. Le matériau de stockage de lithium à base de silicium selon la revendication 1, **caractérisé en ce que** le revêtement en carbone graphitisé est dopé avec des atomes d'azote.

3. Le matériau de stockage de lithium à base de silicium selon la revendication 1, **caractérisé en ce que** la seconde enveloppe est une phase coexistante formée à partir d'un ou plusieurs oxydes sélectionnés dans le groupe constitué d'un oxyde d'un élément du groupe IIA, d'un oxyde d'un élément des terres rares, et d'un composé formé entre Ti, Zr et oxygène.

4. Le matériau de stockage de lithium à base de silicium selon la revendication 1, **caractérisé en ce que** l'élément dopant R comprend au moins un élément du groupe IA, du groupe IIA et du groupe IIIA.

5. Le matériau de stockage de lithium à base de silicium selon la revendication 4, **caractérisé en ce que** les éléments du groupe IA, du groupe IIA et du groupe IIIA comprennent Li, Na, Mg, Ca ou Al.

6. Le matériau de stockage de lithium à base de silicium selon la revendication 1, **caractérisé en ce que** la première enveloppe a une épaisseur de 1 à 40 nm.

7. Un procédé de préparation du matériau de stockage de lithium à base de silicium selon les revendications 1 à 6, comprenant
la préparation d'un noyau du matériau de stockage de lithium à base de silicium, où le noyau comprend
un premier composant, comprenant du Si avec une valence de 0 à 4, à la condition que 0 ≤ C_{Si(1-4)}/C_{Si(0)} ≤ 1, où C_{Si(1-4)} est une quantité molaire de l'élément silicium avec une valence de 1 à 4, et C_{Si(0)} est une quantité molaire de l'élément silicium avec une valence de 0; et
un second composant, comprenant un élément dopant R, où l'élément dopant R est un élément capable d'accepter des électrons, à la condition que 0 ≤ C_{R}/Cₛᵢ₍₀₋₄₎ ≤ 1,5, où C_{R} est une quantité molaire de l'élément dopant R, et Cₛᵢ₍₀₋₄₎ est une quantité molaire de l'élément silicium avec une valence de 0 à 4;
le revêtement de la surface du noyau avec une première enveloppe, où la première enveloppe est un matériau contenant du carbone ayant une conductivité supérieure à 10**²** S/m, la première enveloppe étant un revêtement en carbone graphitisé; et
le revêtement de la surface de la première enveloppe avec une seconde enveloppe, où la seconde enveloppe est un oxyde métallique ayant une constante diélectrique de 10 à 40, ledit oxyde métallique étant sélectionné parmi MgO, Al₂O₃ et TiO₂,
**caractérisé en ce que** la préparation du noyau du matériau de stockage de lithium à base de silicium comprend
la fourniture d'un premier mélange, où le premier mélange comprend au moins un silicium élémentaire et un silicium ayant un état d'oxydation de +4, ainsi qu'un élément dopant R, où l'élément dopant R comprend au moins un élément du groupe IA, du groupe IIA et du groupe IIIA, à la condition que 0 ≤ C_{R}/Cₛᵢ₍₀₋₄₎ ≤ 1,5, où C_{R} est la quantité molaire de l'élément dopant R, et Cₛᵢ₍₀₋₄₎ est la quantité molaire de l'élément silicium avec une valence de 0 à 4;
le chauffage du premier mélange à l'état fondu sous protection d'un gaz non oxydant, puis le refroidissement à température ambiante à un taux de refroidissement de 5 °C/s à 30 °C/s, afin d'obtenir un produit refroidi sous forme de flocons; et
la pulvérisation du produit refroidi sous forme de flocons pour former le noyau du matériau de stockage de lithium à base de silicium; où
la température de chauffage à l'état fondu est comprise entre 1500 °C et 3000 °C; et
le revêtement de la surface de la première enveloppe avec la seconde enveloppe comprend
le mélange d'un composé précurseur ou d'une combinaison de ceux-ci avec le noyau revêtu de la première enveloppe et la décomposition du composé précurseur par une réaction de décomposition thermique, et le revêtement de la surface de la première enveloppe avec une seconde enveloppe, lors duquel le composé précurseur est décomposé pour former la seconde enveloppe, où
le composé précurseur est le tétrabutyl titanate, l'isopropoxyde d'aluminium, l'isopropoxyde de magnésium ou le bromure de phényl magnésium.

8. Le procédé de préparation d'un matériau de stockage de lithium à base de silicium selon la revendication 7, **caractérisé en ce que** le refroidissement du premier mélange fondu à température ambiante à un taux de refroidissement de 5 à 30 °C/S comprend le coulage du premier mélange fondu sur un rouleau rapide et la séparation du premier mélange fondu du rouleau par une action centrifuge du rouleau afin d'obtenir un produit refroidi sous forme de flocons.

9. Le procédé de préparation d'un matériau de stockage de lithium à base de silicium selon la revendication 7, **caractérisé en ce que**
le revêtement de la surface du noyau avec une première enveloppe comprend,
dans une atmosphère non oxydante, le passage d'une substance source de carbone dans une zone de pré-décomposition pour former un produit de décomposition, où la substance source de carbone comprend une ou plusieurs substances carbonées gazeuses, une substance source de carbone vaporisée ou une substance source de carbone atomisée; et
l'ajustement du débit volumique V_{G} du produit de décomposition dans une chambre de réaction d'une zone de dépôt-revêtement, ainsi que du rapport Mc/M du débit molaire du produit de décomposition à la masse du noyau, afin de soumettre le noyau et le produit de décomposition à une réaction de dépôt et de revêtement dans la zone de dépôt-revêtement, formant ainsi une première enveloppe sur la surface du noyau, à la condition que 10 ≤ V_{G} ≤ 100 et 0,001 ≤Mc/M < 1, où V_{G} est exprimé en m/min, Mc est exprimé en une unité mol/min en termes d'atomes de carbone, et M est la masse du noyau, exprimée en kg.

10. Le procédé de préparation d'un matériau de stockage de lithium à base de silicium selon la revendication 9, **caractérisé en ce que** la substance source de carbone gazeuse comprend du méthane, de l'éthane, de l'éthylène, de l'acétylène, du propane et du propylène; la substance source de carbone vaporisée comprend le n-hexane, l'éthanol et le benzène; et la substance source de carbone atomisée comprend le polyéthylène et le polypropylène.

11. Le procédé de préparation d'un matériau de stockage de lithium à base de silicium selon la revendication 9, comprenant en outre l'introduction d'une substance contenant de l'azote lors de la réaction de dépôt et de revêtement, où ladite substance contenant de l'azote comprend une ou plusieurs entre NH₃, tripolycyanamide, acétonitrile, aniline et butylamine.
